(19) Europäisches Patentamt
European Patent Office
Office européen des brevets

(11) EP 0 831 131 A1

(12) EUROPÄISCHE PATENTANMELDUNG

(43) Veröffentlichungstag: **25.03.1998 Patentblatt 1998/13**

(51) Int. Cl.[6]: **C09B 35/029**, D21H 21/28

(21) Anmeldenummer: **97115689.8**

(22) Anmeldetag: **10.09.1997**

(84) Benannte Vertragsstaaten:
**AT BE CH DE DK ES FI FR GB GR IE IT LI LU MC NL PT SE**

(30) Priorität: **23.09.1996 DE 19638891**

(71) Anmelder: **BAYER AG**
**51368 Leverkusen (DE)**

(72) Erfinder:
- **Mennicke, Winfried, Dr.**
  **51375 Leverkusen (DE)**
- **Kunde, Klaus, Dr.**
  **53819 Neunkirchen-Seelscheid (DE)**

(54) **Verfahren zum Färben von cellulosehaltigen Materialien mit Disazofarbstoffen**

(57) Das neue Verfahren zum Färben von cellulosehaltigen Materialien mit Disazofarbstoffen der Formel

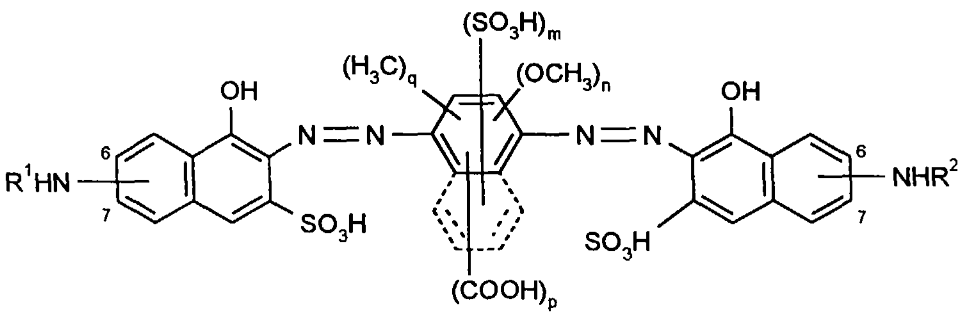

(I),

worin
die Substituenten $NHR^1$ und $NHR^2$ jeweils in 6- und/oder 7-Position stehen und

$R^1$, $R^2$, m, n, p und q die in der Beschreibung angegebene Bedeutung haben,

liefert blaue Färbungen in sehr guten Echtheiten.

EP 0 831 131 A1

## Beschreibung

Die vorliegende Erfindung betrifft ein Verfahren zum Färben von cellulosehaltigen Materialien mit bestimmten Verbindungen vom Disazofarbstoff-Typ sowie neue solche Verbindungen und Verfahren zu deren Herstellung.

Das erfindungsgemäße Verfahren zum Färben von cellulosehaltigen Materialien ist dadurch gekennzeichnet, daß als Farbstoff mindestens eine Verbindung der Formel (I)

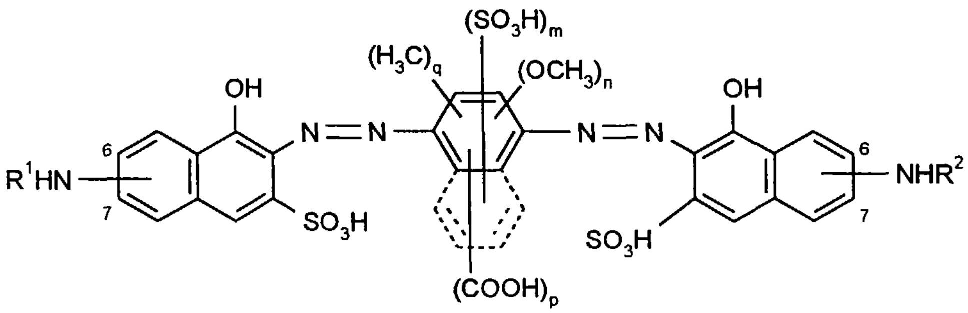

(I),

worin
die Substituenten $NHR^1$ und $NHR^2$ in 6- und/oder 7-Position stehen,
vorzugsweise der Formel

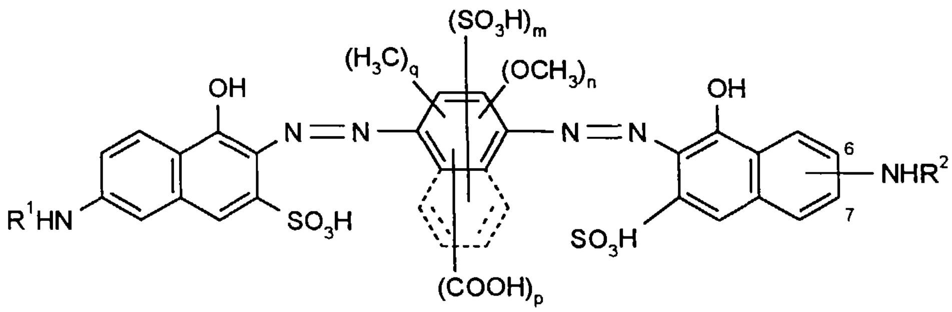

(Ia),

worin
der Substituent $NHR^2$ in 6- oder 7-Position steht,
insbesondere der Formel

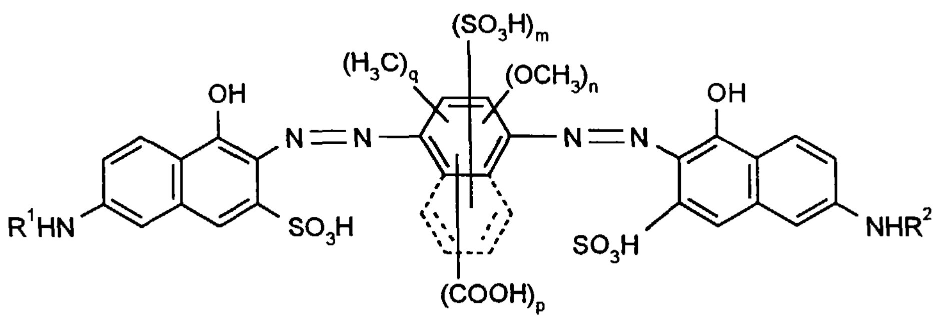

(Ib),

worin jeweils

$R^1$ und $R^2$ unabhängig voneinander für Wasserstoff, Acetyl oder gegebenenfalls durch $CH_3$, $OCH_3$, COOH, $SO_3H$ substituiertes Phenyl oder Benzoyl stehen,

m, n, p, q für 0 oder 1 stehen und

m + p = 1 ist,

eingesetzt wird.

Die Farbstoffe der Formel (I) können in Form von festen oder flüssigen Farbstoffpräparationen, insbesondere von konzentrierten wässrigen Lösungen für das erfindungsgemäße Verfahren eingesetzt werden.

Das erfindungsgemäße Verfahren ist geeignet zum Färben von cellulosehaltigen Materialien, insbesondere zum Färben von Baumwolle und Celluloseregenerat-Fasern nach den gängigen Ausziehverfahren für Garne und Stücke und im Kontinueverfahren.

Weiterhin eignet sich das erfindungsgemäße Verfahren besonders zum Färben von Papier.

Als Papier kommen prinzipiell alle Papiersorten in Frage, insbesondre geleimte und ungeleimte Papiere. Das erfindungsgemäße Verfahren eignet sich zum Färben von Papier in der Masse oder in der Oberfläche.

Verbindungen der Formeln (I), (Ia) und (Ib) mit Ausnahme der Verbindungen, worin $R^1$ und $R^2$ gleichzeitig für Wasserstoff stehen, sind neu und ebenfalls Gegenstand der vorliegenden Erfindung.

Verbindungen der Formel (I), worin $R^1$ und $R^2$ gleichzeitig für Wasserstoff stehen, sind aus DE-A-3 520 389 bekannt, wo sie als Zwischenprodukte zur Herstellung von Tetrakisazofarbstoffen eingesetzt werden.

Die neuen und bekannten Verbindungen der Formel (I) können hergestellt werden, indem man Verbindungen der Formel

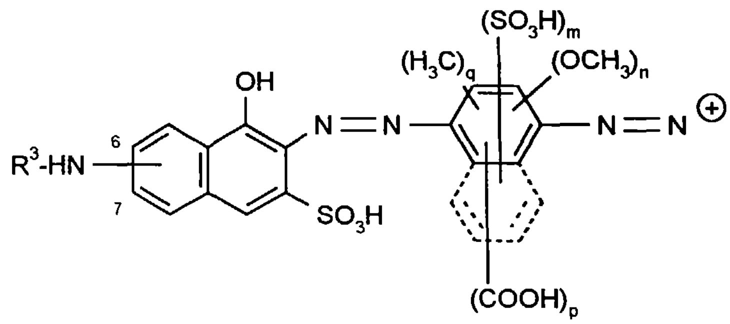

(II),

worin

der Substituent $NHR^3$ in 6- oder 7-Position steht,

$R^3$ für Acetyl, Maleinyl oder für gegebenenfalls durch $CH_3$, $OCH_3$, COOH, $SO_3H$ substituiertes Phenyl oder Benzoyl steht und

q, m, n und p die oben angegebene Bedeutung haben,

mit Verbindungen der Formel

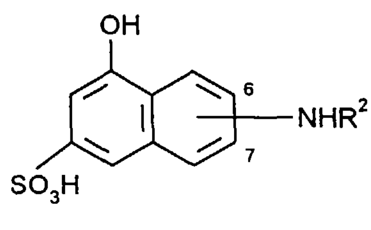

(III),

worin

$R^2$ die oben angegebene Bedeutung hat,

kuppelt und gegebenenfalls die Acetyl- oder Maleinylreste hydrolytisch abspaltet.

Bevorzugte Verbindungen der Formel (I) sind solche,

worin

$R^1$ und $R^2$ unabhängig voneinander für Wasserstoff, Acetyl oder gegebenenfalls durch $CH_3$, $OCH_3$, COOH, $SO_3H$ substituiertes Phenyl oder Benzoyl stehen,

m, n, p, q für 0 oder 1 stehen und

m + p = 1 ist.

Bevorzugt sind Verbindungen der Formel (I), worin m + n + p + q = 1 oder 2 ist.

Besonders bevorzugt sind Verbindungen der Formel (I), worin $R^1$ und $R^2$ unabhängig voneinander für Wasserstoff, Phenyl oder 3-Carboxyphenyl stehen und die Summe (p + n) Null oder 1 ist.

Die Diazoniumverbindungen (II) können erhalten werden, indem man Verbindungen der Formel

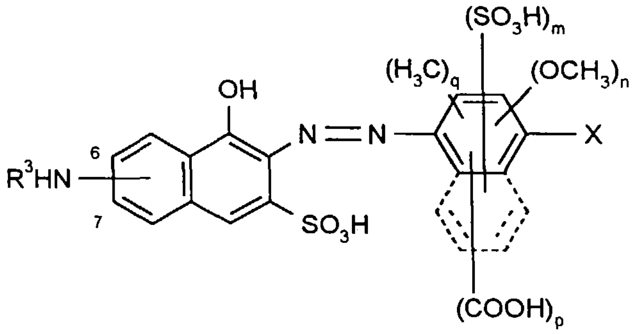

(IV),

worin
der Substituent $NHR^3$ in 6- oder 7-Position steht,

X für $NO_2$ steht und

$R^3$, q, m, n und p die oben angegebenen Bedeutungen haben,

in an sich bekannter Weise zu den Aminoverbindungen der Formel

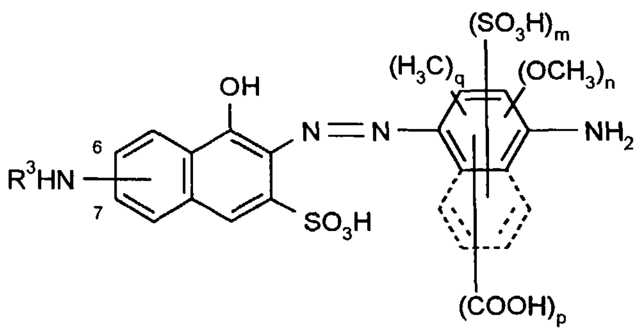

(V),

worin
der Substituent $NHR^3$ in 6- oder 7-Position steht und

$R^3$, q, m, n und p die oben angegebene Bedeutung haben,

reduziert,
oder indem man Verbindungen der Formel (IV), worin

X für

$$\underset{H}{\underset{|}{N}}-COCH_3\ ,\quad \underset{H}{\underset{|}{N}}-COCH=CHCOOH$$

steht,

in an sich bekannter Weise zu den Aminoverbindungen der Formel (V) (gegebenenfalls selektiv) hydrolysiert und diese in an sich bekannter Weise diazotiert.

Die Kupplung der Diazoniumverbindungen (II) mit den Verbindungen (III) erfolgt in wässrigem oder wässrig-organischem Medium, vorzugsweise in Wasser, in Lösung oder Suspension bei 0 bis 40°C, vorzugsweise bei 5 bis 20°C, bei pH-Werten zwischen 6 und 10, vorzugsweise zwischen 6,5 und 9,5; die gegebenenfalls selektive Abspaltung des Maleinylrestes erfolgt bei Temperaturen zwischen 60 und 105°C, vorzugsweise zwischen 70 und 90°C, bei pH-Werten zwischen 2 und 4, vorzugsweise zwischen 2,5 und 3,5, die Abspaltung des Acetylrestes erfolgt bei Temperaturen zwischen 60 und 105°C, vorzugsweise zwischen 70 und 90°C, bei pH-Werten zwischen 10 und 13, vorzugsweise zwischen 11 und 12.

Die Kupplungskomponenten der Formel (III) sind bekannt.

Die Verbindungen (I) können eingesetzt werden in Form fester Farbstoffpräparationen, vorzugsweise als Pulver oder Granulate, die gegebenenfalls übliche Zusatzstoffe, wie z.B. ionische oder nichtionische Einstellmittel und/oder Entstaubungsmittel enthalten.

Für das erfindungsgemäße Verfahren bevorzugt ist die Verwendung flüssiger Präparationen, insbesondere die Verwendung von konzentrierten wässrigen Lösungen, die vorzugsweise frei sind von organischen Lösungsvermittlern und mindestens eine Verbindung der Formel (I) enthalten. Die flüssigen Farbstoffpräparationen enthalten im allgemeinen 10 bis 40 Gew.-%, vorzugsweise 20 bis 40 Gew.-% an mindestens einer Verbindung (I), bezogen auf die fertige Präparation.

Die Verbindungen (I) färben cellulosehaltige Materialien, insbesondere Papier, Baumwolle und Viskose in blauen Tönen mit guten Naß- und Lichtechtheiten.

Die Verbindungen (I) können erfindungsgemäß nach allen in der Papier- und Textilindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichten oder ungebleichten Zellstoff verschiedener Provenienz wie Nadel- oder Laubholz-sulfit- und/oder -Sulfat-Zellstoff. Sie können auch in der Garn- oder Stückfärberei von Baumwolle, Viskose und Leinen nach dem Ausziehverfahren aus langer Flotte oder in Kontinueverfahren angewandt werden.

Zum erfindungsgemäßen Färben von Papier in der Masse können die Verbindungen (I) der Papierpulpe vor der Blattbildung zugesetzt werden, entweder dem Dickstoff nach dem Aufschlagen der Cellulose oder dem Dünnstoff vor dem Auflaufen auf die Papiermaschine. Bei der Herstellung von in der Masse geleimtem Papier werden sie vorzugsweise vor der Zugabe des Leimungsmittels dem Dünnstoff zugesetzt.

Bei der erfindungsgemäßen Färbung von Papier in der Oberfläche wird die Verbindung (I) auf das gebildete Blatt appliziert. Dies geschieht vorzugsweise in der Leimpresse, indem die Verbindung (I) in einer konzentrierten Stärkelösung aufgelöst und in dieser Form auf das Papier aufgebracht wird.

Die mit den erfindungsgemäßen Verbindungen (I) erhaltenen Papierfärbungen zeichnen sich durch gute Licht- und Naßechtheit (Ausblutechtheit) sowie Säure-, Alkali- und Alaun-Echtheit aus. Auch auf die Brillanz und Klarheit der Farbtöne ist hinzuweisen. Ferner ist das Kombinationsverhalten mit geeigneten Farbstoffen sehr gut.

**Beispiel 1**

51,4 g der Verbindung der Formel

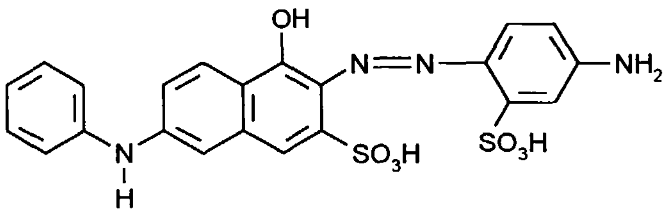

werden mit 6,9 g Natriumnitrit diazotiert und bei einem pH-Wert von 8,5 und einer Temperatur von 20°C mit 31,5 g 7-Phenylamino-4-hydroxy-2-naphthalinsulfonsäure gekuppelt. Der Farbstoff wird durch Zugabe von Salz ausgefällt, isoliert und getrocknet. Er entspricht der Formel

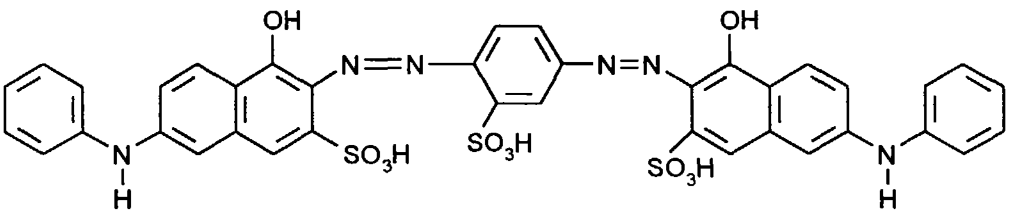

$\lambda_{max}$ = 593 nm

**Beispiel 2**

Verwendet man statt der Aminoazoverbindung aus Beispiel 1 die Verbindung der Formel

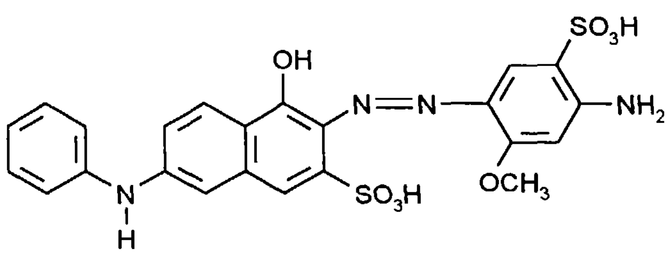

so erhält man den Farbstoff der Formel

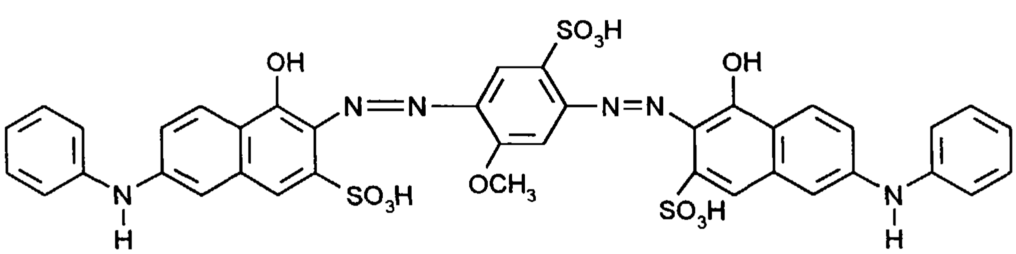

$\lambda_{max}$ = 596 nm

**Beispiel 3**

44,4 g der Verbindung der Formel

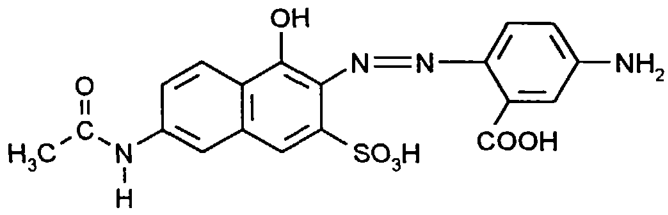

werden wie die Aminoverbindung aus Beispiel 1 diazotiert und mit 35,9 g 7-(3'-Carboxyphenylamino)-4-hydroxy-2-naphthalinsulfonsäure gekuppelt. Der pH-Wert des Ansatzes wird mit Natronlauge auf 12 gebracht, dann wird der Acetylrest bei 90°C abgespalten. Der Farbstoff wird durch Zugabe von Salz ausgefällt, isoliert und getrocknet. Er entspricht der Formel

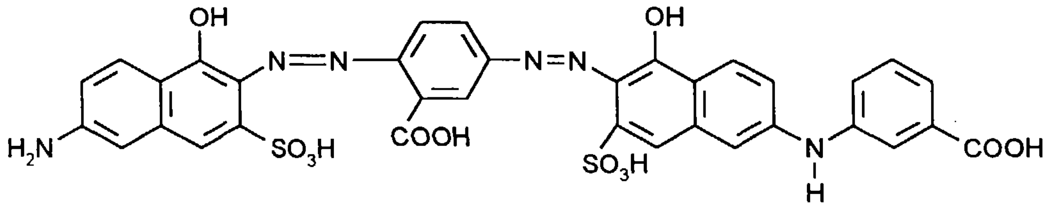

$\lambda_{max} = 610$ nm

**Beispiele 4 bis 13**

Aus den in der folgenden Tabelle angegebenen Diazo- und Kupplungskomponenten wurden analog zu den in den Beispielen 1 und 3 beschriebenen Verfahren ebenfalls erfindungsgemäße Farbstoffe hergestellt.

| Bsp. | Diazokomponente | Kupplungskomponente | $\lambda_{max}$ |
|---|---|---|---|
| 4 | 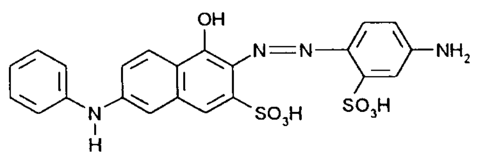 | 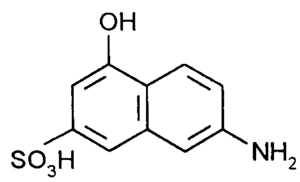 | 591 nm |
| 5 | 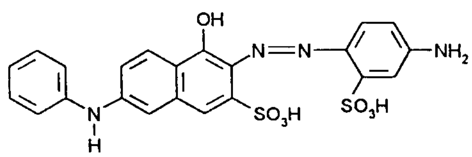 | 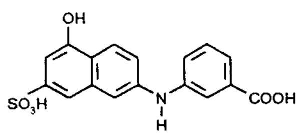 | 593 nm |
| 6 | 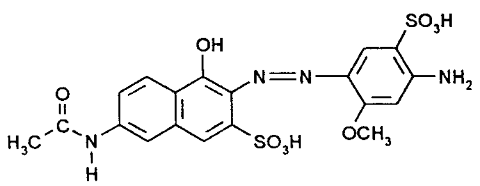 | 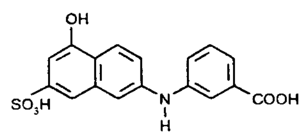 | 623 nm |
| 7 | 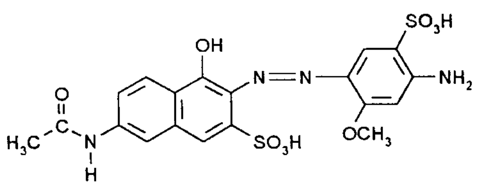 | 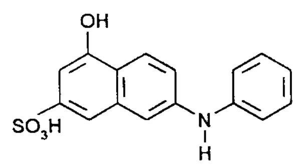 | 618 nm |
| 8 | 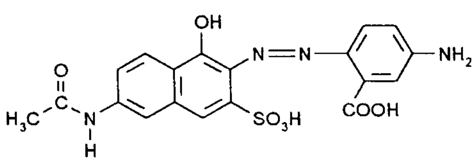 | 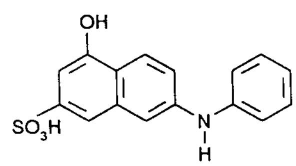 | 615 nm |
| 9 | 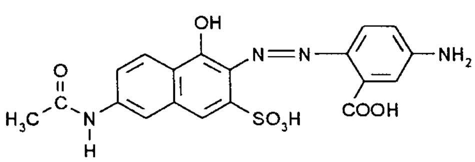 | 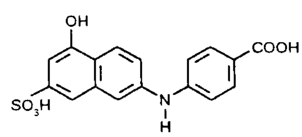 | 584 nm |

| Bsp. | Diazokomponente | Kupplungskomponente | $\lambda_{max}$ |
|---|---|---|---|
| 10 | 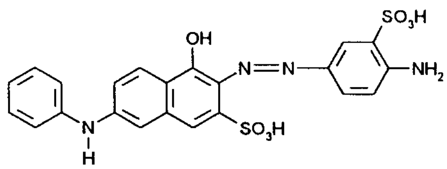 | 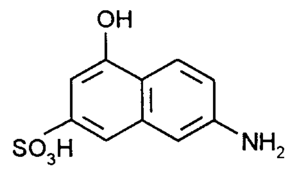 | 590 nm |
| 11 | 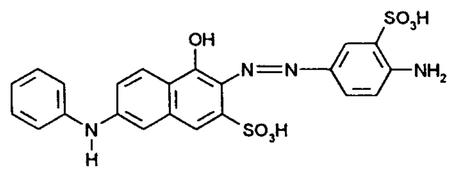 | 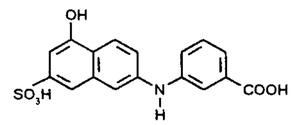 | 594 nm |
| 12 | 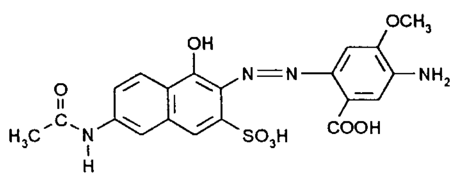 | 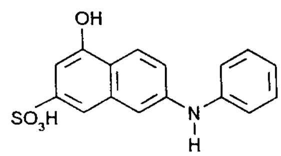 | 618 nm |
| 13 | 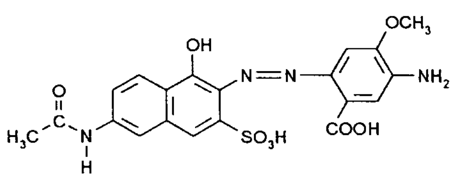 | 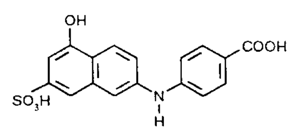 | 616 nm |
| 14 | 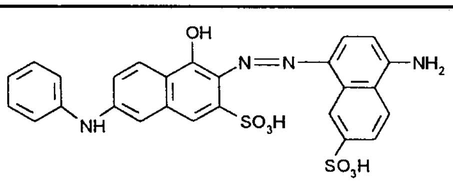 | 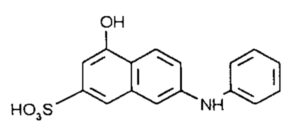 | 638 nm |
| 15 | 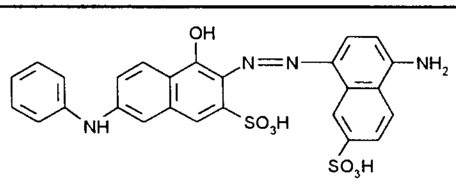 | 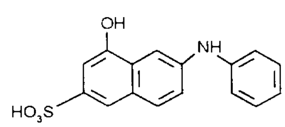 | 641 nm |

| Bsp. | Diazokomponente | Kupplungskomponente | $\lambda_{max}$ |
|---|---|---|---|
| 16 | 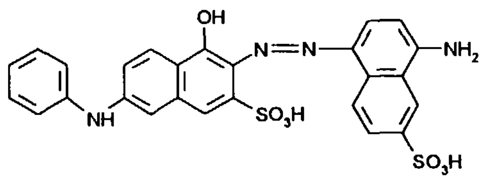 | 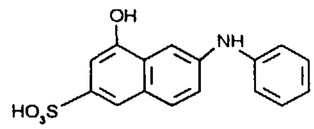 | 641 nm |
| 17 | 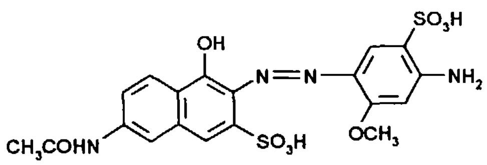 | 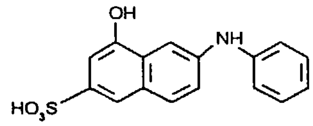 | 629 nm |
| 18 | 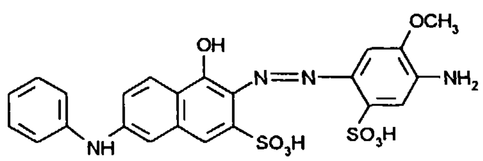 | 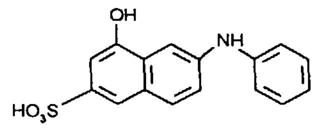 | 637 nm |
| 19 | 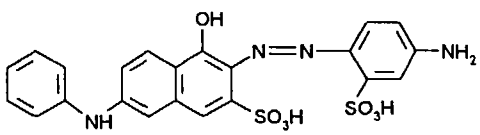 | 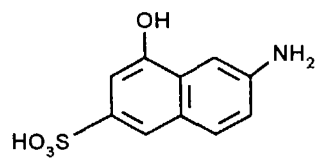 | 630 nm |
| 20 | 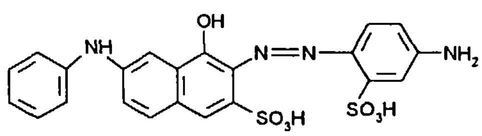 | 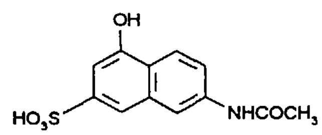 | 624 nm |
| 21 | 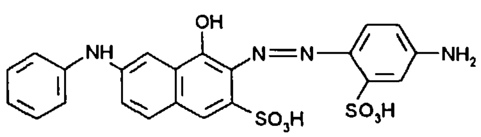 | 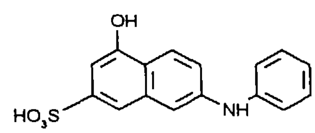 | 631nm |

## Färbebeispiele

**Beispiel 1** - Druckpapier -

800 kg Sulfatcellulose, gebleicht und

200 kg Sulfitcellulose, gebleicht, werden in einem Pulper, in dem

14 cbm Fabrikationswasser vorgelegt sind, eingetragen und bis zur Stippenfreiheit aufgeschlagen. Der Aufschlagvorgang benötigt 30 Minuten. Anschließend wird der aufgeschlagene Zellstoff in eine Ableerbütte überführt. Aus der Ableerbütte wird die Zellstoffsuspension mit Stoffmühlen auf einen Mahlgrad von 25° SR (nach Schopper-Riegler) gemahlen und gelangt anschließend in eine Mischbütte. In der Mischbütte erfolgen als weitere Zusätze

250 kg Kaolin Ia (als Füllstoff) sowie 1 % Farbstoff der Formel

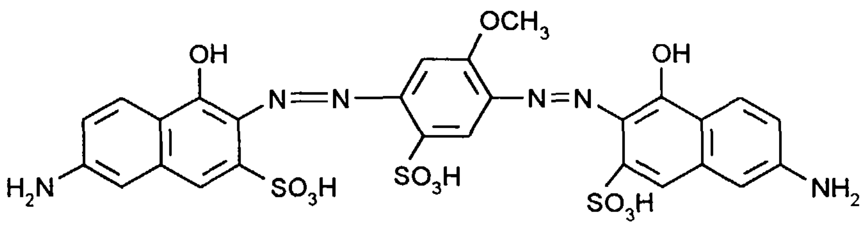

,

$\lambda_{max}$: 611 nm

berechnet auf absolut trockene Faser (in Form einer wässrigen Lösung von 20 g/l). Nach 15 Minuten Aufziehzeit werden 2 % Harzleim (absolut trocken) sowie nach 10 Minuten 4 % Alaun (beides berechnet auf absolut trockene Cellulose) zugefügt. pH der Stoffsuspension: 5,3. Dieser Papierstoff gelangt über den in dieser Industrie üblichen Prozessablauf auf die Papiermaschine.

**Beispiel 2** - Tissuepapier -

1000 kg Sulfatcellulose, gebleicht werden in einem Pulper, in dem

14 cbm Fabrikationswasser vorgelegt sind, eingetragen und bis zur Strippenfreiheit aufgeschlagen. Der Aufschlagvorgang benötigt 30 Minuten. Anschließend wird der aufgeschlagene Stoff in einer Ableerbütte überführt. Aus der Ableerbütte wird der Zellstoff mit Stoffmühlen auf einen Mahlgrad von 25° SR gemahlen und gelangt anschließend in eine Mischbütte. In der Mischbütte erfolgt die Zugabe von 1 % Farbstoff der Formel

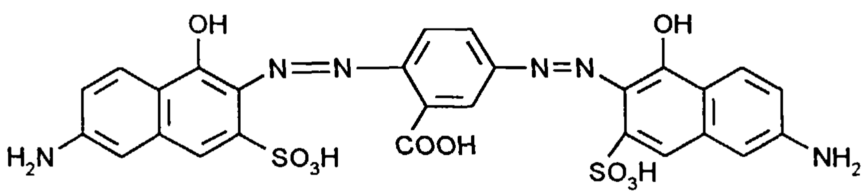

$\lambda_{max}$: 574 nm

berechnet auf absolut trockene Faser, in Form einer wässrigen Lösung von 20 g/l. pH der Stoffsuspension: 7. Nach 15 Minuten Aufziehzeit gelangt dieser Papierstoff über den in dieser Industrie üblichen Prozessablauf auf die Papiermaschine.

**Beispiel 3** - Sizepress Applikation -

In

1000 ltr. einer 10%igen anionischen Stärkelösung werden

5 kg Farbstoff der Formel

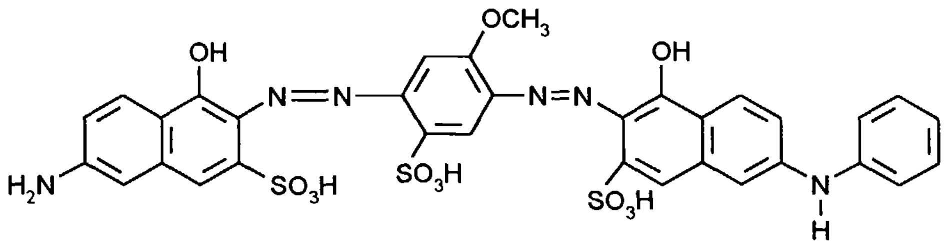

$\lambda_{max}$: 616 nm

gelöst und mittels Leimpresse auf das Papier appliziert. Der Auftrag der Lösung beträgt 1,5 g/$m^2$ absolut trocken je Seite.

**Patentansprüche**

1. Verfahren zum Färben von cellulosehaltigen Materialien, dadurch gekennzeichnet, daß als Farbstoff mindestens eine Verbindung der Formel

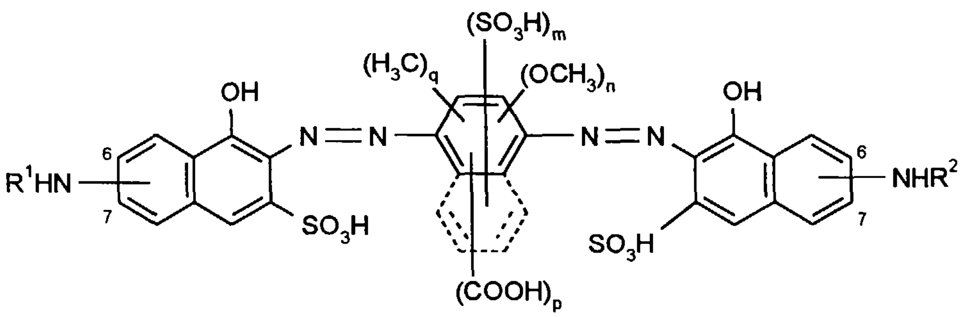

(I),

worin
die Substituenten $NHR^1$ und $NHR^2$ in 6- und/oder 7-Position stehen,

| | |
|---|---|
| $R^1$ und $R^2$ | unabhängig voneinander für Wasserstoff, Acetyl oder gegebenenfalls durch $CH_3$, $OCH_3$, COOH, $SO_3H$ substituiertes Phenyl oder Benzoyl stehen, |
| m, n, p, q | für 0 oder 1 stehen und |
| m + p | = 1 ist, |

eingesetzt wird.

2. Verfahren nach Anspruch 1, worin als Farbstoff mindestens eine Verbindung der Formel

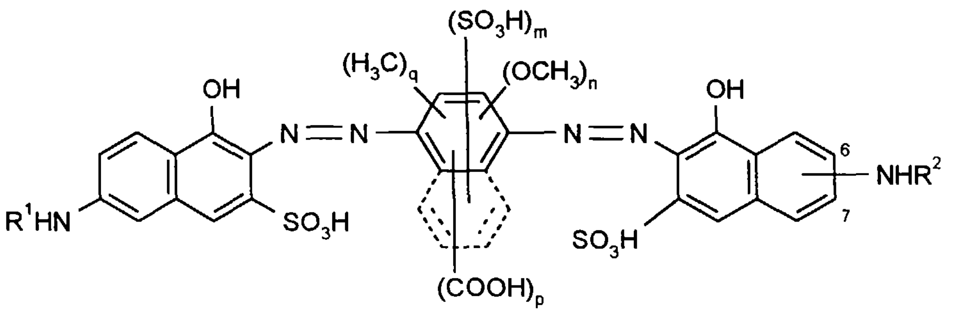

(Ia),

worin
der Substituent $NHR^2$ in 6- oder 7-Position steht und

$R^1$, $R^2$, m, n, p, q     die in Anspruch 1 angegebenen Bedeutungen besitzen,

eingesetzt wird.

**3.** Verfahren nach Anspruch 1, worin der Farbstoff mindestens eine Verbindung der Formel

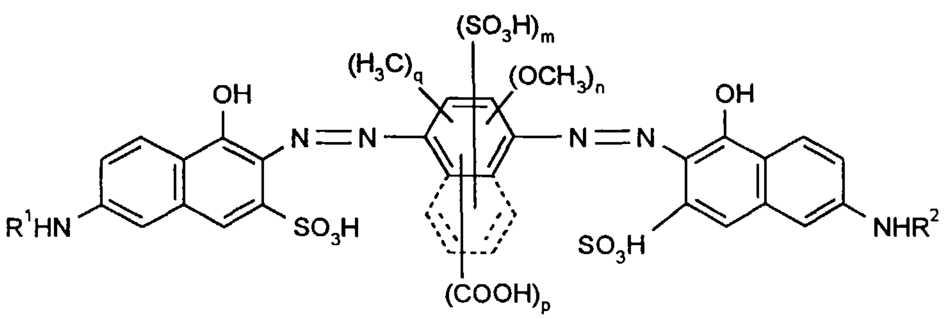

(Ib),

ist, worin

$R^1$, $R^2$, m, n, p, q     die in Anspruch 1 angegebenen Bedeutungen besitzen.

**4.** Verfahren gemäß Ansprüchen 1 bis 3, dadurch gekennzeichnet, daß es sich bei den cellulosehaltigen Materialien um Baumwolle oder Celluloseregeneratfasern handelt, die nach dem Ausziehverfahren oder im Kontinueverfahren gefärbt werden.

**5.** Verfahren gemäß Ansprüchen 1 bis 4, dadurch gekennzeichnet, daß es sich bei den cellulosehaltigen Materialien um Papier handelt.

**6.** Verfahren gemäß Ansprüchen 1 bis 5, dadurch gekennzeichnet, daß die Verbindung (I) in Form einer flüssigen Farbstoffpräparation, die 10 bis 40 Gew.-% mindestens einer Verbindung der Formel (I), bezogen auf die fertige Präparation, enthält, eingesetzt wird.

**7.** Verbindungen der Formel (I) entsprechend der Definition des Anspruchs 1 mit Ausnahme der Verbindungen, worin $R^1$ und $R^2$ gleichzeitig für Wasserstoff stehen.

**8.** Verbindungen der Formel (Ia) entsprechend der Definition des Anspruchs 2 mit Ausnahme der Verbindungen, worin $R^1$ und $R^2$ gleichzeitig für Wasserstoff stehen.

**9.** Verbindungen der Formel (Ib) entsprechend der Definition des Anspruchs 3 mit Ausnahme der Verbindungen, worin $R^1$ und $R^2$ gleichzeitig für Wasserstoff stehen.

10. Verfahren zur Herstellung von Farbstoffen der Formel (I) gemäß Anspruch 1, dadurch gekennzeichnet, daß man Verbindungen der Formel

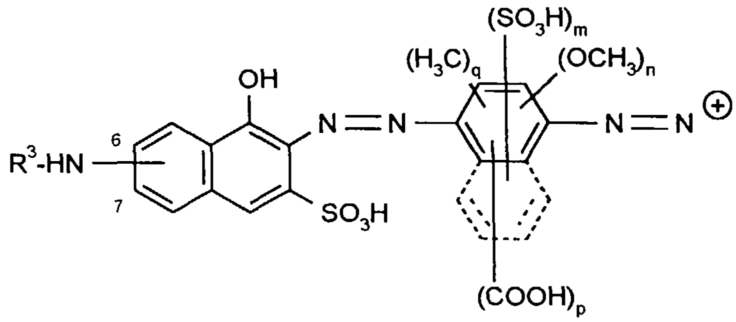

(II),

worin
der Substituent $NHR^3$ in 6- oder 7-Position steht,

$R^3$ für Acetyl, Maleinyl oder für gegebenenfalls durch $CH_3$, $OCH_3$, COOH, $SO_3H$ substituiertes Phenyl oder Benzoyl steht und

q, m, n und p die in Anspruch 1 angegebene Bedeutung haben,

mit Verbindungen der Formel

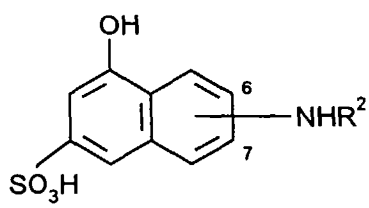

(III),

worin
der Substituent $NHR^2$ in 6- oder 7-Position steht und

$R^2$ die in Anspruch 1 angegebene Bedeutung hat,

kuppelt und gegebenenfalls vorhandene Acetyl- oder Maleinylreste hydrolytisch abspaltet.

Europäisches Patentamt

# EUROPÄISCHER RECHERCHENBERICHT

Nummer der Anmeldung
EP 97 11 5689

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 391 170 A (BAYER AG)<br>* Seite 2, Zeile 1 - Seite 4, Zeile 26 *<br>* Seite 6; Beispiele 9,10,13 *<br>* Seite 7; Beispiele 15,19 *<br>* Seite 8; Beispiele 20,21 *<br>* Seite 11; Beispiel 39 *<br>* Seite 15; Beispiel 60 *<br>* Seite 16; Beispiel 68 *<br>* Seite 17; Beispiele 70-73 *<br>--- | 1-10 | C09B35/029<br>D21H21/28 |
| Y | EP 0 534 903 A (CIBA-GEIGY AG)<br>* Seite 2, Zeile 1 - Seite 4, Zeile 15 *<br>* Beispiele 129-131,133 *<br>--- | 1-10 | |
| A | EP 0 301 350 A (BAYER AG)<br>* Beispiele 41-43 *<br>* Ansprüche 5-9 *<br>--- | 1-10 | |
| D,A | EP 0 204 244 A (BAYER AG)<br>* Seite 2, Formel (II) *<br>* Beispiele *<br>----- | 7-9 | RECHERCHIERTE SACHGEBIETE (Int.Cl.6)<br>C09B<br>D21H |

Der vorliegende Recherchenbericht wurde für alle Patentansprüche erstellt

| Recherchenort | Abschlußdatum der Recherche | Prüfer |
|---|---|---|
| DEN HAAG | 22.Dezember 1997 | Ketterer, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)